# EUROPEAN PATENT APPLICATION

(11) **EP 1 271 993 A2**
(43) Date of publication of application: **02.01.2003**
(21) Application number: 02013536.4
(22) Date of filing: 18.06.2002
(51) Int. Cl.: H04Q 11/00

(54) **All optical switching routing system**

(30) Priority: 19.06.2001 US 884831
(71) Applicant: TRW Inc., Redondo Beach, California 90278 (US)
(72) Inventor: Ferguson, Bruce A., Redondo Beach, CA 90278 (US); Fields, Richard A., Redondo Beach, CA 90277 (US); Leight, James E., San Ramon, CA 94583 (US); Upton, Eric L., Bellevue, Washington 98004 (US); Kasody, Robert E., Long Beach, CA 90804 (US)
(74) Representative: Schmidt, Steffen J., Dipl.-Ing.

(57) **Abstract**

An optical switching device that routes an optical data packet using an all optical architecture signal detection and switching system. The packet includes header bits, data bits and a reset bit. The header bits identify the switch state for routing the data packet and the specific routing information for distinct portions of the data packet. The header bits are transmitted at an optical carrier frequency different than the carrier frequency of the data bits. The reset bit resets the switch element processor to enable it to process and route the next data packet. The frequency of a particular header bit affects the index of refraction of a Bragg grating of a detector and the output of the detector is provided to a switch that determines the routing path of the packet. A return command resets the diffraction grating so that it does not affect subsequent header bits.

## Description

### BACKGROUND OF THE INVENTION

### 1. Field of the Invention

This invention relates generally to an optical switching system for routing a digital optical data packet in the optical domain and, more particularly, to an optical switching system for routing a digital optical data packet in the optical domain, where the data packet includes header bits distinguishable from each other and from data bits by their carrier frequency to identify the routing path.

### 2. Discussion of the Related Art

Optical communications networks exist in the art that transmit information from one location to another location along fiber optical cables. In these types of optical communications networks, optical signals are modulated by RF signals to define the information being transmitted. The information is identified by optical digital bits, where groups of bits are transmitted as packets including a predetermined number of bits. Typically, these packets will include several hundred bits. The packets of bits include several header bits that identify the address location to which the information is being routed. Further, overhead bits are usually provided in the packet that are used for system maintenance purposes. The remaining bits which make up the bulk of the packet are the data bits that identify the specific information being transmitted. The packets are routed through a routing network that includes nodes or switches that read the header bits to direct the packets to the desired destination.

The known optical systems that route packets of optical digital data typically include devices that convert the bits of data to a representative electrical signal using an array of photodiodes. The equivalent electrical signal is sent to a buffer where the header bits are read, and depending on the header bit information, the electrical information packet is routed to the desired location. Usually, the electronic signal switching hardware has the same length header and the same data bit length to be read before the information packet is routed so that there is no selection time saving when the data bits are already used up. Once the routing of the packet is determined, the electrical signal is then converted back to an optical signal for transmission along the next link of fiber optical cable.

Optical routing devices that convert the optical signal to an electrical signal prior to being read suffer from a number of drawbacks and disadvantages through the switch. Further, because the incoming optical signals are converted to electrical signals, stored in a buffer to be read, and then read, the process is relatively time consuming. Further, the conversion hardware adds significant complexity to the system. Also, it is difficult to vary the speed of the conversion process for different data rates.

It would be beneficial in terms of speed and efficiency to eliminate the electrical digital conversion step in an optical data routing system, and perform all signal processing and switching in the optical domain. It is therefore an object of the present invention to provide an optical switching system that routes optical data packets in the optical domain.

### SUMMARY OF THE INVENTION

In accordance with the teachings of the present invention, an optical switching system is disclosed that routes an optical data packet using an all-optical architecture. The packet includes header bits, data bits and a reset bit. The header bits identify the switch state for routing the data packet and the specific routing information for distinct portions of the data packet. The header bits are transmitted at an optical carrier frequency different from the carrier frequency of the data bits. The number of header bits determines the total number of data packet destinations. It is also possible to use the header bits to identify the form of the incoming data, and to determine synchronization data for the packet that allows for true, all optical ATM packet switching. The reset bit at the end of the packet resets the switching system to enable it to process and route the next data packet. This allows variable length data packets to be sent in the same transmission because the location and the value of the reset bit determines the packet size.

In one embodiment, the incoming data packet is applied to a series of detectors including Bragg diffraction gratings. The frequency of a particular header bit determines which Bragg grating couples light out of the fiber. The output of a corresponding detector is provided to a switch that determines the routing direction of the packet. A return command causes the diffraction grating to be de-tuned so that it does not affect subsequent header bits having that carrier frequency. A reset detector is provided to detect the reset bit so that the switching system is ready for the next data packet.

Additional objects, advantages and features of the present invention will become apparent from the following description and appended claims, taken in conjunction with the accompanying drawings.

### BRIEF DESCRIPTION OF THE DRAWINGS

Figure 1 is an optical data packet showing the various bits in the packet;

Figure 2 is an optical data packet showing various data transmission protocols that can be used with the switching system of the present invention;

Figure 3 is a schematic block diagram of a switching system for routing an optical data packet in an all optical domain, according to an embodiment of the present invention; and

Figure 4 is a plan view of a header bit detector used in the switching system shown in Figure 3.

### DETAILED DESCRIPTION OF THE PREFERRED EMBODIMENTS

The following discussion of the preferred embodiments directed to a switching system for routing an optical data packet completely in the optical domain is merely exemplary in nature, and is in no way intended to limit the invention or its applications or uses.

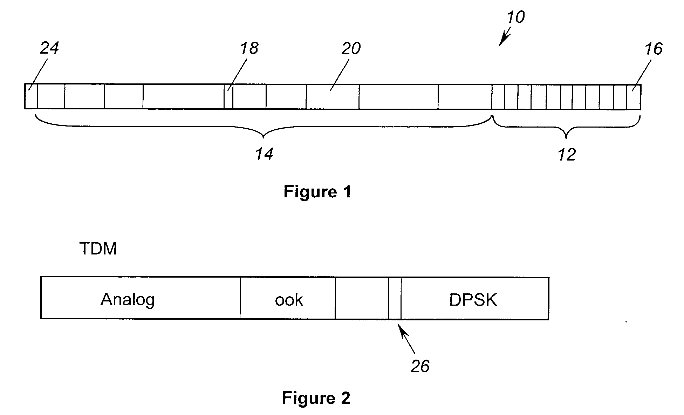

Figure 1 is a representation of an optical digital data packet 10 that is transmitted through an optical communications system from an optical source to an optical destination where the digital data is processed. The various bits in the packet 10 are identified by modulating a carrier wave, where the modulation may be intensity, phase, frequency or polarization modulation. Optical communication networks of this type are well known to those skilled in the art, and may implement various protocols and optical switching devices.

The optical data packet 10 includes a header portion 12 and a data portion 14 that are made up of a plurality of optical header bits 16 and data bits 18, respectively. In this example, the header portion 12 includes eleven header bits 16 that identify the location or destination of the packet 10, and provide 2¹¹ such destinations. The bulk of the packet 10 is the data portion 14 which is separated into different data sections 20, where each section 20 includes a plurality of the data bits 18. The header bits 16 typically come at the beginning of the packet 10, and a reset bit 24 comes at the end of the packet 10 to identify the end of the packet 10. The main purpose of the reset bit 24 is to let the system know not to look for any additional header bits in the packet 10. Figure 2 illustrates an optical data packet including a variety of optical formats that can be transmitted through the optical network, including analog, OOK and DPSK, where a reset bit 26 is not positioned at the end of the packet in this example.

In the conventional system, each bit in the data packet would be transmitted at the same carrier frequency f. The packet would be processed in a serial manner where a certain number of consecutive header bits would identify an address or routing location. According to the present invention, for reasons that will become apparent from the following discussion, different optical carrier wave frequencies are used for the data bits 18 and the header bits 16. This allows the packet 10 or the header portion 12 to be processed in a parallel manner. For example, each of the bits 18 in the data portion 14 may be transmitted at a carrier frequency f₀, and the header bits 16 may be transmitted at a different frequency f₁. Additionally, different bits 16 within the header portion12 may be transmitted at different carrier frequencies and at different frequencies than the bits 18 in the data portion 14. For example, the data bits 18 may be at frequency f₀, the first header bit may be at a frequency f₁, the second header bit may be at frequency f₂, the third header bit 16 may be at frequency f₃, etc. Further, the reset bit 24 may be at yet another frequency f₄. Different systems will incorporate different carrier frequencies for the various header bits 16 and data bits 18, within the scope of the present invention.

The number of header bits 16 determines the total number of data packet destinations. For example, a two-bit header means the data goes to one of four possible locations, and a one-bit header means the data goes to one of two locations. Therefore, not only does the system use the carrier frequency of the header bits to determine the location, but also uses the information in those bits to determine the location. The header bits 16 are encoded with optical intensity 'frequency, phase or polarization information that can be used to decode and to determine where the data should be routed.

It is also possible to use the header bits 16 to identify the form of the incoming data. For example, the frequency of the carrier wave for the header bit 16 could be used to determine whether the incoming data is in an analog phase-modulated format, phase shift-keyed digital format, or double side-band suppressed carrier format. The header bits 16 can also be used to determine synchronization data for the packet 10 that allows for true, all optical ATM packet switching.

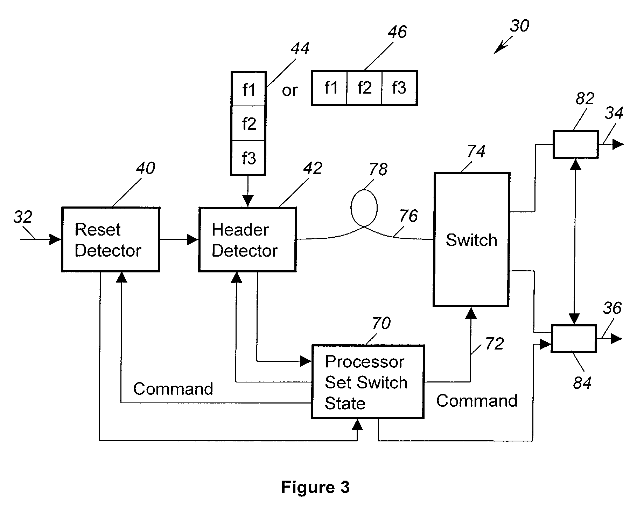

Figure 3 is a schematic block diagram of an optical signal routing system 30 that routes optical signals to one of several locations, according to an embodiment of the present invention. The routing system 30 receives the optical packet 10 on an input fiber optical cable 32, and outputs the optical packet 10 on either an output fiber optical cable 34 or an output fiber optical cable 36 depending on the carrier frequency of the header bits 16. As will be appreciated by those skilled in the art, the system 30 can include other outputs for directing the packet 10 to other destinations within the scope of the present invention. The packet 10 is received by a reset detector system 40 that detects the presence of the reset bit 24 to identify the end of the packet 10. The operation of the reset detector system 40 will be described in more detail below.

The packet 10 propagates through the detector system 40 and is received by a header bit detector system 42. The header bit detector system 42 detects the header bits 16 depending on their carrier frequency. A sequence of serial header bits 44 (arranged serially in time) and parallel header bits 46 (arranged in WDM fashion within the same time slot) are represented at the different carrier frequencies f₁ - f₃ that are acted on by the detector system 42 either in a serial or parallel manner.

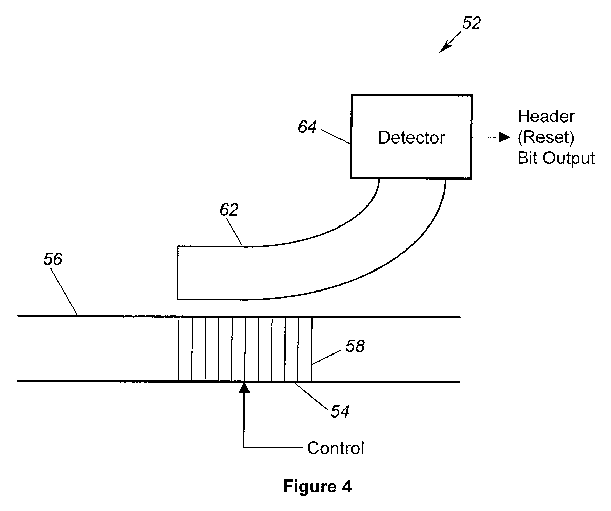

The header detector system 42 includes a plurality of optical detectors, where each detector detects one of the frequencies f₁ - f₃ of the header bits 16. The number of detectors is determined by the number of carrier frequencies of the header bits 16. Figure 4 shows a representative example of one of the plurality of detectors 52 in the header detector system 42. The detector 52 includes a Bragg diffraction grating 54 formed in a fiber optical cable 56 through which the packet 10 propagates. The diffraction grating 54 includes a series of diffraction lines 58 that are formed in waveguide, and change the index of refraction of the optical medium of the cable 56. The diffraction grating 54 operates in such a manner that if the light has a particular frequency, it will be diffracted in a desirable manner by the lines 58 as it propagates through the cable 56. In other words, if the grating 54 is tuned to a particular frequency, the light at that frequency will be directed out of the cable 56 to be received by a fiber optical cable 62 that is optically coupled to the cable 56. That header bit 16 is then removed from the packet 10. The use of the diffraction grating 54 is by way of a non-limiting example in that other optical detectors or gratings that detect optical frequencies suitable for the purposes described herein can be used.

The light received by the fiber optical cable 62 is detected by a photodetector 64 which generates an electrical signal indicative of the optical signal received. For reasons that will become apparent from the discussion below, the diffraction grating 54 receives a control signal that de-tunes the grating lines 58 so that the particular carrier frequency is not diffracted and the light can propagate through the cable 56 without being directed to the photodetector 64. A separate detector 52 is provided for each of the frequencies so that the processor uses these frequencies to determine the routing of the packet 10.

The plurality of signals from the various detectors 52 and the header detector system 42 are applied to a processor 70. Photodetector 64 in the detector system 42 provides outputs to the processor 70 which determines the command on line 72 applied to an optical switch 74. Because the data bits 18 in the packet 10 will have a frequency that is not removed by the detectors 52 in the header detector system 42, they will propagate unimpeded through the detector system 42. The packet 10 propagates from the detector system 42 on fiber optical cable 76 through a delay 78 provided for timing purposes. The switch 74 provides one of two outputs for the packet 10 depending on the command on the line 72. Because the switch 74 is being activated based on information in the header portion 12 of the packet 10, it also acts to resynchronize the data for timing purposes. In different embodiments, multiple commands may be coming from the processor 70 to the switch 74 for those embodiments with more than two output paths.

The reset detector system 40 also includes a Bragg diffraction grating detector, such as detector 52, or some other suitable frequency detection device. When the reset detector system 40 detects the reset bit 24, it sends a signal to the processor 70 that the end of the packet 10 has been received. The processor 70 then sends a signal to the header detector system 42 that is the control signal to the various Bragg gratings 54 for tuning purposes, as discussed above. Once the processor 70 receives the commands from the header detector system 42 identifying the routing of the switch 74, it can send a signal back to the header detector system 42 to de-tune the various Bragg gratings 54 so that they do not remove subsequent header bits 16 that may have the same carrier frequency that the Bragg gratings 54 were tuned to, so that the these header bits can be used in subsequent routing systems to route the packet 10. Once the processor 70 receives the signal from the reset detector system 40 indicating that the end of the packet has passed, the signal from the processor 70 to the header detector system 42 can then retune the Bragg gratings 54 to the original frequencies.

The removed header bits 16 can be reinstated or the remaining header bits can be modified depending on how the data packet 10 is to be routed from the system 30. An output from the processor 70 is applied to a modifier 82 or 84 that, depending on which output from the switch 74 the data packet 10 is on, will reinsert the header bits 16 removed by the header detector system 42, or change the carrier frequency of the header bits 16 to adjust the routing of the data packet down the road.

The foregoing discussion discloses and describes merely exemplary embodiments of the present invention. One skilled in the art will readily recognize from such discussion and from the accompanying drawings and claims, that various changes, modifications and variations can be made therein without departing from the spirit and scope of the invention as defined in the following claims.

## Claims

1. An optical switching network for routing an optical data packet, said optical data packet including a plurality of digital optical bits, each optical bit including an optical carrier frequency, said optical data packet including optical header bits identifying the routing path of the packet, said network comprising:
a header bit detection system including a plurality of frequency detectors each detecting the carrier frequency of a particular header bit;
a processor responsive to a signal from the plurality of detectors, and generating a command signal indicative of which header bits are detected by the header detection system; and
an optical switch responsive to the optical packet from the header detection system and receiving the command signal from the processor, said optical switch routing the optical data packet to one of a plurality of output paths from the switch depending on the detected header bits.

2. The network according to claim 1 further comprising a reset bit detection system, said reset detection system detecting a reset bit in the optical data packet, and providing a signal to the processor indicating that the reset bit has been detected.

3. The network according to claim 2 wherein the processor provides a signal to the header detection system to de-tune the frequency detectors in response to the signal from the reset detection system so that the frequency detectors do not detect the header bits.

4. The network according to claim 1, wherein the plurality of frequency detectors comprise Bragg diffraction.

5. The network according to claim 1, wherein the optical header bits occur other than at the beginning of the packet.

6. The network according to claim 1, and further comprising:
a plurality of header bit modifiers, where a header bit modifier is positioned on each output path from the optical switch, said header modifier modifying the header bits in the optical data packet.

7. The network according to claim 6 wherein the header bit modifier replaces a header bit that was detected by a frequency detector.

8. The network according to claim 6, wherein each header bit modifier receives a signal from the processor and changes the optical carrier frequency of the header bits in response to the signal; and
an optical switch responsive to the optical packet from the header detection system and receiving the command signal from the processor, said optical switch routing the optical data packet to one of a plurality of output paths from the switch depending on the detected header bits.

9. The network according to claim 1, wherein the optical carrier frequency is different from the carrier frequency of any of the data bits.

10. The network according to claim 1 further comprising an optical delay between the header detection system and the optical switch, said optical delay delaying the optical data packet.

11. The network according to claim 1, wherein the plurality of optical bits in the optical data packet further include a plurality of optical data bits, and at least one reset bit, wherein the data bits include data to be transmitted, the header bits identify the routing path of the packet, and the at least one reset bit identifies the end of the optical packet, each optical bit in the data packet including an optical carrier frequency where the carrier frequency of the data bits is different than the carrier frequency of the header bits; and
wherein the network further comprises a reset bit detection system for detecting the reset bit, said reset bit detection system providing a reset signal to the processor indicating that the reset bit has been detected, said processor providing a signal to the header detection system to de-tune the frequency detectors in response to the reset signal from the reset detection system.

12. The network according to claim 11 wherein the plurality of frequency detectors are Bragg diffraction gratings.

13. A method for routing optical data packets, where the data packets include a plurality of digital optical data bits, a plurality of digital optical header bits, and at least one reset bit, each bit including an optical carrier frequency where the carrier frequency of the data bits is different than the carrier frequency of the header bits, said method comprising the steps of:
detecting the carrier frequency of the header bits using a plurality of frequency detectors;
providing a command signal to an optical switch of which header bits have been detected; and
routing the optical data to one of a plurality of output paths from the switch depending on which header bits were detected.

14. The method according to claim 13 further comprising the steps of detecting the reset bit, providing a signal to the processor indicating that the reset bit has been detected, and de-tuning the detectors in response to the reset bit being detected.

15. The method according to claim 13 further comprising the step of changing the carrier frequency of the header bits to change the route of the data packet.

16. The method according to claim 13 further comprising the step of reinstating a header bit that was detected by the frequency detectors.
